Europäisches Patentamt

European Patent Office

Office européen des brevets

(19)

(11) Numéro de publication: **0 496 310 A1**

# (12) DEMANDE DE BREVET EUROPEEN

(21) Numéro de dépôt: **92100804.1**

(22) Date de dépôt: **20.01.92**

(51) Int. Cl.5: **A23G 1/18**, A23G 1/00, A23D 9/00

(30) Priorité: **25.01.91 CH 242/91**

(43) Date de publication de la demande:
**29.07.92 Bulletin 92/31**

(84) Etats contractants désignés:
**AT DE DK FR GB IT NL**

(71) Demandeur: **BATTELLE MEMORIAL INSTITUTE**
**7 route de Drize**
**CH-1227 Carouge/Genève(CH)**

(72) Inventeur: **Giddey, Claude**
**59, Route de Chêne**
**CH-1208 Genève(CH)**
Inventeur: **Dove, Georges**
**1, Ouai du Cheval-Blanc**
**CH-1227 Carouge(CH)**

(74) Mandataire: **Dousse, Blasco et al**
**7, route de Drize**
**CH-1227 Carouge/Genève(CH)**

(54) **Procédé pour modifier la structure cristalline du beurre de cacao et utilisation de celui-ci en chocolaterie.**

(57) On ensemence du beurre de cacao fondu par un nombre très élevé de germes de SOS-$\beta$ et on maintient la masse dans un intervalle de température où seuls les triglycérides-$\beta$ cristallisent. Le beurre de cacao ainsi modifié permet, par adjonction à du chocolat sortant de conche, de supprimer l'opération de tempérage de ce chocolat. Ce dernier, une fois moulé, résiste remarquablement au blanchiment et à la chaleur.

FIG.3

EP 0 496 310 A1

La présente invention a pour objet un procédé pour modifier la structure cristalline du beurre de cacao, plus particulièrement, pour en élever la teneur en la forme cristalline -$\beta$ du triglycéride 1,3-distéaroyl-2-oléoylglycérol (SOS).

On sait que le beurre de cacao, l'un des ingrédients principaux de l'industrie chocolatière, est constitué principalement (en poids) des triglycérides suivants:

SOS environ 24 - 28 %; POS (1-palmitoyl-3-stéaroyl-2-oléoylglycérol) environ 30 - 40 %; POP (dipalmitoyl-2-oléoylglycérol) environ 15 - 20 %, le total des triglycérides restants, par exemple POO, OOO, etc., correspondant à environ 10 à 20 % (voir C. Giddey et al., Rev.Int.Choc. 10(1961), 548-554).

Ce mélange de triglycérides peut exister sous différentes formes cristallines polymorphes, à savoir les formes $\alpha$, $\gamma$, $\beta'$, $\beta$, etc., dont les propriétés physiques (notamment le point de transition solide-liquide $T_c$ et la stabilité) sont bien distinctes. Ainsi, les températures de fusion de ces différentes formes peuvent se situer dans une gamme de 15°C à plus de 40°C. Dès lors, les propriétés physiques globales de la masse de beurre de cacao peuvent varier sensiblement en fonction du type de traitement thermique auquel celui-ci est soumis en cours de fabrication et lors de son utilisation en chocolaterie.

Ainsi, si du beurre de cacao fondu est simplement refroidi, il peut rester liquide jusqu'à une température de 18 à 20°C. Pour cette raison, on procède souvent, lors de la fabrication du chocolat, à un "tempérage" de la masse fondue, à savoir, on la refroidit temporairement vers 25 - 27°C tout en la brassant, puis on la réchauffe à nouveau entre 29 et 31°C, toujours sous agitation, de façon à provoquer l'apparition de germes de cristallisation de formes polymorphes relativement plus stables des triglycérides, la présence de ces germes tendant à favoriser, ultérieurement lors du refroidissement, la cristallisation préférentielle de ces formes plus stables dont la température de fusion est plus élevée.

Tel qu'il est généralement pratiqué, le tempérage permet de conférer au beurre de cacao une structure solide convenant aux applications chocolatières. En effet, le chocolat présente, après tempérage, une résistance à la chaleur suffisante pour les besoins courants, c'est-à-dire, une température de ramollissement d'environ 28 à 30°C. Cependant, cette résistance relative à la chaleur peut ne pas suffire en pays tropicaux et, par ailleurs, le stockage prolongé du chocolat à des températures ne dépassant pas 30°C par exemple, peut conduire à une fusion interne partielle des matières grasses qu'il contient, celles-ci tendant alors à diffuser en surface et, lors du refroidissement, à former des efflorescences blanchâtres déplaisantes (blooming). Il est donc désirable d'améliorer encore l'état cristallin des graisses du chocolat et leur tenue à la chaleur sans altérer leur composition et les propriétés gustatives du chocolat.

Il est par ailleurs notoire que, parmi les formes stables des triglycérides du beurre de cacao, c'est la forme $\beta$- du SOS qui présente le point de fusion le plus élevé (F = 40-43°C) et qui est la plus efficace pour stabiliser, lors de sa solidification par refroidissement, l'état cristallin du beurre de cacao et ainsi élever sa température globale de fusion.

Ainsi, GIDDEY et al. (ibid.) ont montré qu'on pouvait avantageusement modifier le beurre de cacao en dispersant, dans sa masse à l'état fondu, des germes de SOS-$\beta$. Pour celà, on porte cette masse à 34°C et on y disperse 1,5 à 5 % en poids de SOS-$\beta$ purifié, puis on homogénéise le tout au moyen d'un homogénéiseur à piston. La présence du SOS-$\beta$ ainsi homogénéisé dans la masse fondue induit alors, lors d'un refroidissement modéré de celle-ci (10 à 15°C), la cristallisation préférentielle partielle des isomères stables des triglycérides du beurre de cacao et une amélioration sensible de sa résistance à la chaleur. D'autres techniques similaires ont également été mises en oeuvre, notamment l'ensemencement du beurre de cacao (et du chocolat) fondu par des particules très fines de SOS-$\beta$ (20 à 70 $\mu$m) ces particules étant obtenues par cryopulvérisation (à -50°C) du SOS (voir les articles de T.KOYANO et al. dans J.A.O.C.S. 66-(1989), 664-679 et 1757-1770). Par ailleurs, le document EP-A-294 974 (FUJI OIL) décrit un accélérateur de tempérage, notamment du chocolat, constitué principalement de triglycérides 1,3-saturés-2-insaturés comportant des restes d'acides gras de 50 à 56 atomes de carbone au total. Suivant une forme d'exécution mentionnée dans ce document, on obtient un tel accélérateur en pulvérisant du beurre de cacao et en maintenant un certain temps la poudre ainsi obtenue à des températures inférieures à 0°C.

En ce qui concerne la stabilisation préférentielle du SOS du beurre de cacao sous sa forme cristalline bêta, le présent inventeur a maintenant découvert que les résultats des techniques antérieures pouvaient être sensiblement améliorés (voir les revendications), en tenant compte des observations suivantes: en effet, lorsqu'on ensemence une masse de beurre de cacao à l'état fluide par un grand nombre (par unité de poids ou de volume) de germes de SOS-$\beta$ en particules très fines (de l'ordre de 0,1 à 100 $\mu$m), et que, lors de ce traitement, on maintient la masse fondue dans une plage de températures inférieures à la fusion du SOS-$\beta$ mais auxquelles tous les autres triglycérides restent à l'état fondu, une proportion notable du triglycéride SOS que contient la masse (de l'ordre de 50 % au moins) cristallise sous la forme -$\beta$. Cette technique contraste donc avec celle mentionnée plus haut où, après avoir ensemencé la masse avec du SOS $\beta$ et l'avoir homogénéisée par un homogénéiseur à piston, on la laisse aussitôt refroidir.

Par ailleurs, pour réaliser une suspension de particules de SOS $\beta$ très fines dont la quantité initiale est élevée (de l'ordre de $10^8$ à $10^{12}$ particules/g de beurre de cacao), il est désirable d'effectuer la dispersion, dans des conditions propres à fournir au milieu une énergie suffisante pour que la dimension des particules de SOS-$\beta$ qu'on ajoute soient fortement réduite et ne dépasse pas, en moyenne, une taille approximative de 100 $\mu$m. Une telle énergie peut être fournie au milieu par une violente agitation ou par un effet de broyage. Il est cependant bien évident que cette valeur de 100 $\mu$m n'est donnée qu'à titre référentiel général, des particules de taille excédant cette limite, par exemple atteignant ou dépassant 500 $\mu$m, pouvant être occasionnellement présentes sans affecter les propriétés du beurre de cacao modifié (BCM). En fait, le facteur important à respecter dans ce procédé est l'énergie cinétique (effet de cisaillement) fournie par l'agitation ou le broyage, cette énergie devant être suffisante pour réduire autant que possible la taille des cristaux d'ensemencement et augmenter simultanément leur nombre par unité de poids (ou de volume) dans la suspension résultant de l'ensemencement. Après ensemencement et dispersion, on peut poursuivre la phase d'épaississement sous agitation ou non, étant cependant donné que l'agitation empêche les cristaux nouvellement formés de croître démesurément après qu'ils aient été engendrés, et ceci, tant que la masse est maintenue dans ledit intervalle de température.

Pour mettre en oeuvre la présente invention au point de vue pratique, on liquéfie le beurre de cacao de manière qu'il soit totalement fondu et on ajoute à la masse fluide du SOS-$\beta$ (préalablement purifié par recristallisation) dans des conditions mécaniques telles que soit obtenue, initialement, une suspension très fine de ce SOS-$\beta$ dans la masse totalement liquéfiée. Une telle suspension contient environ $10^8$ à $10^{12}$ germes de SOS-$\beta$ en particules d'une taille comprise, de préférence, entre 0,1 et 100 $\mu$m. On peut estimer la concentration et la taille de ces particules par observation microscopique ou en utilisant un compteur de particules suivant les moyens usuels. Puis on laisse reposer ou on poursuit l'agitation un temps suffisant pour qu'une proportion notable du SOS présent cristallise sous forme de fines particules d'isomère de cristallisation -$\beta$, celles-ci donnant un aspect opalescent ou laiteux à la masse. Peu à peu, au cours de l'agitation, cet aspect laiteux s'intensifie jusqu'à devenir opaque et la masse s'épaissit jusqu'à consistance pâteuse, ce qui permet de juger du degré d'avancement de l'opération. La température à laquelle, durant la cristallisation du $\beta$-SOS, on maintient la masse en fusion est de 31 à 36°C, de préférence 32,5 à 34°C, avantageusement 33°C, et le temps nécessaire à faire cristalliser à cette température au moins 50 % en poids du SOS présent sous sa forme -$\beta$ est de 1 à 6 heures, de préférence 2 à 3 heures. Des périodes de moindre durée, par exemple de 5 à 60 minutes, sont également applicables, quoique moins désirables, le degré de modification conféré au beurre de cacao ainsi traité dépendant dans une certaine mesure du taux de SOS-$\beta$ formé. Des périodes d'épaississement dépassant 6 heures, pouvant par exemple atteindre 20 heures, sont également possibles mais moins économiques. Par ailleurs, on peut évidemment ensemencer le beurre de cacao fondu avec des quantités de SOS-$\beta$ dépassant 5 %, mais ceci sans avantages particuliers.

La nature et la construction de l'agitateur homogénéiseur utilisé dans la présente invention présente de l'importance, en ce sens que l'agitation doit être assez performante pour exercer un effet de réduction mécanique (attrition, pulvérisation, broyage) sur les particules de $\beta$-SOS d'ensemencement. L'agitation doit donc être assez violente pour que la masse fluide soit bien brassée et que les particules en suspension au sein du liquide soient animées d'un mouvement préférablement turbulent. Il faut cependant que l'agitation ne chauffe pas trop le milieu et que la température ne dépasse pas, même localement, les valeurs indiquées. Il peut être donc préférable d'agiter de manière intermittente. On a obtenu de bons résultats en utilisant un appareil homogénéiseur-broyeur à tête cylindrique comportant, sur sa périphérie, des fentes longitudinales par lesquelles le liquide est expulsé radialement par l'effet de rotation d'une hélice placée axialement à l'intérieur de la tête. Cependant, au point de vue pratique, on peut parfaitement remplacer la fonction de broyage d' un appareil d'homogénéisation par l'emploi d'un mortier et de son pilon. Industriellement on utilise, de préférence, un broyeur-mélangeur à galets. Il est à noter par ailleurs, que si on poursuit l'agitation au-delà de la phase initiale de dispersion et de broyage, on empêche avantageusement les nouvelles particules de SOS-$\beta$ qui se forment de s'agglomérer entre elles pendant la phase d'épaississement ou de former de gros cristaux.

Une fois la période d'épaississement terminée, c'est-à-dire lorsque la quantité de $\beta$-SOS en suspension dans la masse en mouvement est suffisante, on arrête l'agitateur et on procède au refroidissement de la masse. Cette opération n'est pas critique et s'effectue, de préférence, en laissant simplement la masse au repos à température ambiante pendant quelques heures. Au besoin, on peut accélérer le processus par balayage avec un courant d'air entre 10 et 25°C.

Pour purifier le $\beta$-SOS ajouté comme amorce de cristallisation dans le présent procédé, on peut utiliser les techniques connues, c est a dire une cristallisation fractionnée du beurre de cacao au moyen de solvants organiques tels que l'acétone ou l'hexane. Ces techniques sont décrites dans les références susmentionnées ainsi que dans les documents GB-A-2 177 715 et 2 177 107. Il est à remarquer que, dans le présent procédé, on peut remplacer le SOS-$\beta$ purifié, par du beurre de cacao modifié (BCM) lors d'une précédente application du présent procédé. Une fois solidifié, le beurre de cacao modifié suivant l'invention (BCM) présente une texture bien distincte de celle du beurre de cacao ordinaire. En particulier, il est plus fragile, se casse plus facilement à la flexion et la zone brisée présente une surface irrégulière et hétérogène avec des facettes très brillantes. Par ailleurs, lorsqu'on chauffe du BCM, il se ramollit à une température nettement supérieure à 30°C et, à 37°C, il n'est pas encore totalement fondu, une partie des triglycérides qui le constituent (vraisemblablement le SOS-$\beta$) étant encore solide.

La figure 1 représente le spectre de diffraction de rayons X du beurre de cacao ordinaire.

La figure 2 représente le spectre de diffraction de rayons X de l'isomère SOS-$\beta$.

La figure 3 représente le spectre de diffraction de rayons X du beurre de cacao (BCM) modifié suivant le procédé de l'invention.

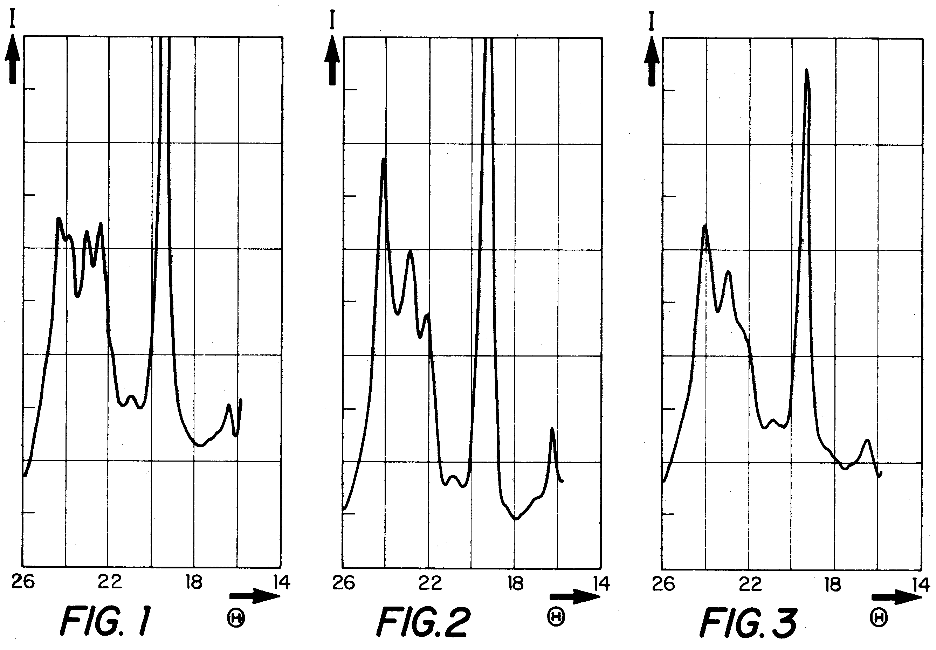

On voit, de par la figure 3 comparée à la figure 1, combien le procédé enrichit le beurre de cacao en isomère de cristallisation SOS-$\beta$.

L'utilisation du beurre de cacao ainsi modifié (BCM) présente pour l'industrie chocolatière un grand intérêt car, incorporé au chocolat même à un taux très faible, il permet d'éviter de devoir tempérer celui-ci et, de plus, il peut conférer au chocolat ainsi traité une résistance inhabituelle à la chaleur ainsi qu'une excellente stabilité contre le blanchiment au stockage.

Au point de vue pratique, on peut simplement ajouter à une masse de chocolat sortant de conche, c'est à dire doucement malaxé entre 32 et 38°C, une quantité d'environ 0,5 à 5 % en poids de BCM en poudre (par exemple râpé), puis de continuer le malaxage entre 32 et 36°C pour bien répartir le BCM dans la masse et y induire la formation du $\beta$-SOS (une à quelques heures de malaxage conviennent). On refroidit ensuite la masse à environ 30°C et on procède à son moulage de façon habituelle, la nécessité de tempérer celle-ci étant totalement évitée, ce qui présente des avantages pratiques et énergétiques indéniables. Une fois moulé, le chocolat est mis à refroidir pour le solidifier, ce processus pouvant être accéléré avantageusement par un courant d'air à 10-15°C. Il est important de noter incidemment que, dans le cadre du présent procédé, on peut maintenir sans inconvénient la masse de chocolat à l'état fluide, par exemple à 35°C, un temps indéterminé. Il en résulte que cette masse peut rester continuellement disponible à une telle température pour toutes applications ultérieures, ce qui est évidemment exclu dans le cas des techniques de tempérage conventionnelles.

Le chocolat ainsi obtenu présente des propriétés très favorables, notamment il se ramollit moins vite à la chaleur que le chocolat non traité; par exemple, il est encore ferme à 30°C, ce qui n'est pas le cas du chocolat ordinaire, et, dans les meilleures conditions ne devient vraiment mou qu'à 34°C. Par ailleurs, il résiste parfaitement, lorsqu'il est stocké, à des alternances successives de chauffage vers 30°C et de refroidissement. Il a en particulier beaucoup moins tendance à blanchir lorsqu'il est exposé, en été, à de telles conditions sur les rayons d'un magasin. Il faut cependant noter que ces propriétés avantageuses disparaissent après chauffage prolongé aux températures dépassant 38°C, vraisemblablement parce que dans de telles conditions les triglycérides de forme cristalline $\beta$- se dissolvent lentement dans la masse fondue des autres triglycérides.

Les exemples qui suivent illustrent l'invention.

Exemple 1

A 100 g de beurre de cacao (spectre de diffraction aux rayons X représenté à la figure 1) porté à 33°C, on a ajouté 2 g de SOS-$\beta$ (F = 40-42°C) et on a broyé ce mélange 2 minutes dans un mortier maintenu à 33°C. On a laissé reposer le mélange 1 heure à 33°C puis on l'a laissé refroidir à température ambiante.

Le spectre de diffraction aux rayons X de la poudre ainsi obtenue (BCM) présentait (voir figure 3) les 4 pics caractéristiques des formes stables des triglycérides du beurre de cacao.

Exemple 2

A 1 kg de beurre de cacao fondu à 32°C, on a ajouté 10 g de SOS-$\beta$ pulvérisé puis on a agité le tout 1 heure au moyen d'une tête d'homogénéisation (type Schweizer, 1,5 mm) fonctionnant de manière intermittente, c'est-à-dire par périodes de 10-15 secondes toutes les 3 minutes environ, de manière que la température se maintienne à 33-34°C. Au cours de cette période, la masse s'est épaissie et a pris un aspect laiteux, la dimension des particules cristallines formées se trouvant principalement dans une gamme de 30-100 $\mu$m.

4

On a ensuite refroidi cette masse (BCM) en chambre froide et on l'a réduite en poudre au moyen d'une râpe ou d'un broyeur. On notera encore que le procédé de l'invention ne s'applique pas seulement à du beurre de cacao à l'état pur, mais également à des mélanges avec d'autres solides, notamment des solides de cacao.

Le spectre de diffraction aux rayons X était analogue à celui de la poudre résultant de l'Exemple 1.

Exemple 3

On a chauffé 1 heure à 50-55°C, de manière à le liquéfier, 400 g de chocolat noir comprenant, en poids, 50 % de poudre de cacao, 30 % de sucre, 17 % de beurre de cacao et 2 % de protéines.

On a laissé la température descendre à 38°C et on a ajouté 12 g de BCM préparé suivant l'Exemple 1 tout en agitant doucement. On a poursuivi l'agitation 3 heures à 35°C puis on a refroidi à 30°C en environ 15 minutes et on a moulé la masse fluide suivant les procédés habituels de moulage de plaques ou barres de chocolat. Après refroidissement à 7°C (en 20-30 minutes) on a démoulé les plaques et on les a soumises au test de blanchiment lequel consiste à chauffer le chocolat à 30°C, à le laisser refroidir à 20-25°C et à répéter ce cycle environ 10 fois.

On a observé aucun blanchiment du chocolat ci-dessus contrairement au témoin (le même chocolat n'ayant pas été traité au BCM) qui était devenu blanchâtre.

Exemple 4

A 150 g de beurre de cacao fondu dont le spectre de diffraction est illustré à la figure 1, on a ajouté 50 g de BCM râpé obtenu suivant l'exemple 2. On a mélangé intimement les deux phases et laissé reposer le tout 3 heures à 33°C. Après refroidissement et prise en masse, on a constaté que le spectre du produit solidifié correspondait à celui représenté à la figure 3.

Exemple 5

On a utilisé un chocolat au lait du commerce dont la composition pondérale est approximativement la suivante :

| Solides de cacao | 15 % |
|---|---|
| Beurre de cacao | 15 % |
| Sucre | 54 % |
| Poudre de lait complet | 12 % |
| Poudre de lait écrémé | 3 % |
| Lécithine | 0.5 % |
| Vanilline | 0.02 % |

On a liquéfié à 50°C, 450 g de ce chocolat et, après avoir abaissé sa température à 34°C, on y a ajouté 6.9 g (1.5 % en poids) de BCM tel que préparé à l'Exemple 2. On a maintenu l'agitation 3 heures à 33°C puis on a refroidi à 30°C et procédé au moulage. Après refroidissement des plaques moulées à 10°C (en 15 minutes environ), on a soumis le chocolat ainsi obtenu à un test de blanchiment consistant à le chauffer à 30°C, puis à le refroidir à 17°C, ce cycle étant répété plusieurs fois (5 à 10 fois). On n'a constaté aucun blanchiment du chocolat traité alors que le témoin (le même chocolat, mais non traité au BCM) avait blanchi.

Exemple 6

On a utilisé une masse pure de cacao dont la composition pondérale était la suivante :

| Solide de cacao | 47 % |
|---|---|
| Beurre de cacao | 52 % |
| $H_2O$ | 1 % |

On a liquéfié à 50°C, 500 g de cette masse de cacao et, après avoir abaissé sa température à 32°C, on a ajouté 10 g de SOS-$\beta$ pulvérisé puis on a agité le tout 1 heure 15 au moyen d'une tête d'homogénéisation (type Schweizer 1,5 mm) fonctionnant de manière intermittente, c'est-à-dire par périodes de 20-25 secondes toutes les 4 minutes environ, de manière que la température se maintienne à 33-34°C. Au cours de cette période, la masse s'est épaissie fortement. Après refroidissement en chambre froide et réduction en poudre de la masse solidifiée au moyen d'une râpe, nous avons constaté que le spectre de diffraction aux rayons X était analogue à celui de la poudre de beurre de cacao modifié résultant de l'exemple 1.

**Revendications**

1.  Procédé pour modifier la structure cristalline du beurre de cacao et en élever la température à laquelle il est entièrement fondu en augmentant, dans la masse des triglycérides qui le constituent, la proportion de la forme monotrope -$\beta$ du triglycéride SOS, ce procédé consistant, dans une première phase opératoire, à chauffer le beurre de cacao jusqu'à liquéfaction totale, à l'ensemencer au-dessus de 30°C de germes de cristallisation, cet ensemencement se faisant par addition et dispersion dans la masse liquide de 0,1 à 5 % en poids de SOS-$\beta$ purifié puis à laisser la masse, toujours fluide, s'épaissir par cristallisation partielle et, dans une seconde phase, à laisser la masse se solidifier par refroidissement, caractérisé en ce qu'on effectue la dispersion du SOS-$\beta$ purifié en broyant et/ou homogénéisant celui-ci dans la masse fluide du beurre de cacao fondu, de manière à réaliser une suspension contenant environ $10^8$ - $10^{12}$ particules solides/g de beurre de cacao, et qu'on laisse la masse ensemencée fluide s'épaissir à une température où seule la forme -$\beta$ des triglycérides puisse cristalliser.

2.  Procédé suivant la revendication 1, caractérisé en ce que la température à laquelle on effectue la phase de dispersion et d'épaississement est de 31 à 36°C, de préférence 32 à 35°C.

3.  Procédé suivant la revendication 1, caractérisé en ce que la durée de la phase d'épaississement est de 1 à 3 h.

4.  Procédé suivant la revendication 4, caractérisé en ce que la proportion de SOS qui cristallise sous forme $\beta$- pendant la phase d'épaississement par rapport à la quantité totale de SOS présente dans la masse de beurre de cacao est d'au moins 50 % en poids.

5.  Procédé suivant la revendication 1, caractérisé en ce qu'on effectue le broyage et l'homogénéisation avec un appareil homogénéiseur-broyeur fonctionnant de manière intermittente ou un broyeur à galets.

6.  Utilisation du beurre de cacao modifié suivant le procédé de la revendication 1 dans la fabrication du chocolat, caractérisé en ce qu'on en incorpore de 0,5 à 5 % en poids dans du chocolat fondu sortant de conche, cette incorporation permettant d'éviter le tempérage de ce chocolat avant moulage.

7.  Utilisation suivant la revendication 6, caractérisée en ce qu'on effectue cette incorporation entre 32 et 36°C de manière à provoquer, dans la masse de chocolat fondu, la conversion d'une portion du SOS qu'elle contient en SOS-$\beta$, puis on refroidit la masse à 30°C et on la moule à cette température.

8.  Utilisation du beurre de cacao modifié suivant le procédé de la revendication 1 pour modifier du beurre de cacao ordinaire, caractérisée en ce qu'on l'utilise comme germes d'ensemencement dans le procédé suivant la revendication 1 à la place du SOS-$\beta$ purifié.

9.  Procédé suivant la revendication 1, caractérisé en ce qu'il s'applique à des mélanges de beurre de cacao et d'autres solides, notamment les solides du cacao.

FIG. 1

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 294 974 (FUJI OIL CO.)<br>* claims 1,8 *<br>* page 2, line 35 - line 55 *<br>* page 3, line 7 - line 54 *<br>* page 4, line 10 - line 17 *<br>* example 4 *<br>--- | 1,9 | A23G1/18<br>A23G1/00<br>A23D9/00 |
| A | P. BRYSELBOUT 'Guide Technologique de la Confiserie Industrielle'<br>1984 , SEPAIC , PARIS, FRANCE<br>Pages 204-210<br>* page 208, paragraph 4 - page 209, paragraph 5 *<br>--- | 1,9 | |
| A | DE-A-2 602 877 (WINKLER & DÜNNEBIER MASCHINENFABRIK UND EISENGIESSEREI KG)<br>* claims 1,2,4 *<br>* page 6, paragraph 2 - page 7, paragraph 1 *<br>* page 8, paragraph 2 - page 10, paragraph 1 *<br>--- | 1,8,9 | |
| A | EP-A-0 139 177 (NESTLE)<br>* claims 1-3 *<br>* page 4, line 14 - line 30 *<br>* page 8, line 5 - line 33 *<br>----- | 1 | TECHNICAL FIELDS SEARCHED (Int. Cl.5)<br><br>A23G<br>A23D |

The present search report has been drawn up for all claims

| Place of search | Date of completion of the search | Examiner |
|---|---|---|
| THE HAGUE | 23 APRIL 1992 | VUILLAMY V.M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

             

& : member of the same patent family, corresponding document

EPO FORM 1503 03.82 (P0401)